# EUROPEAN PATENT APPLICATION

(11) **EP 4 786 766 A1**
(43) Date of publication of application: **05.08.2026**
(21) Application number: 24892799.8
(22) Date of filing: 28.06.2024
(51) Int. Cl.: F02B 29/04, F02D 21/08

(54) **CONTROL METHOD, APPARATUS AND DEVICE FOR COOLING SYSTEM IN ENGINE, AND STORAGE MEDIUM**

(30) Priority: 22.11.2023 CN 202311580613
(71) Applicant: Dongfeng Motor Group Co., Ltd., Wuhan, Hubei 430056 (CN)
(72) Inventor: LI, Li, Wuhan, Hubei 430056 (CN); LIANG, Deyu, Wuhan, Hubei 430056 (CN); ZHAO, Li, Wuhan, Hubei 430056 (CN); LI, Tiedong, Wuhan, Hubei 430056 (CN); GUAN, Yongchao, Wuhan, Hubei 430056 (CN)
(74) Representative: Gille Hrabal Partnerschaftsgesellschaft mbB Patentanwälte
(86) International application number: PCT/CN2024/102183
(87) International publication number: WO 2025/107634

(57) **Abstract**

Disclosed in the present application are a control method, apparatus and device for an engine intercooling system, and a storage medium, wherein the engine intercooling system comprises a water-cooled intercooler and an electronic water pump. The control method comprises: acquiring an actual air-output temperature of a water-cooled intercooler; determining whether the actual air-output temperature is within a preset temperature range; and controlling a low-pressure EGR system and/or an electronic water pump on the basis of a determination result. By means of the technical solution provided in the present application, abnormal problems of overtemperature, knocking, etc., occurring in an engine can be reduced, thereby improving the reliability of the engine.

## Description

### Field of the Invention

The present application relates to the technical field of engines, and in particular to a control method, apparatus and device for an engine intercooling system, and a storage medium.

### Background of the Invention

Exhaust gas recirculation (EGR) technology refers to a technique in which part of the exhaust gas discharged from an engine is recirculated back into the cylinders, so that the exhaust gas mixes with the fresh air-fuel mixture and participates in combustion in the cylinders. Low-pressure EGR technology can effectively increase the EGR rate through providing an EGR valve and adopting optimized calibration control, thereby achieving significant effects of fuel consumption reduction and emission reduction. Therefore, the low-pressure EGR technology has been widely applied to hybrid dedicated engines.

Since the gas flow path of the low-pressure EGR system is relatively long, the responsiveness and transient control of the low-pressure EGR system are highly challenging. In order to reduce exhaust gas flow lag in the low-pressure EGR system and improve transient control accuracy, the engine equipped with the low-pressure EGR system needs to be provided with an intercooling system. At present, when the outlet air temperature of the intercooling system is excessively high or excessively low, abnormal problems such as engine overheating or knocking may occur, thereby reducing the reliability of the engine.

### Summary of the Invention

The embodiments of the present application provide a control method, apparatus and device for an engine intercooling system, and a storage medium, thereby at least to some extent reducing abnormal problems such as engine overheating and knocking, and improving the reliability of the engine.

Other features and advantages of the present application will become apparent from the following detailed description, or can be partially learned through practice of the present application.

According to a first aspect of embodiments of the present application, a control method for an engine intercooling system is provided, the engine intercooling system comprises a water-cooled intercooler and an electronic water pump, and the control method comprises:
acquiring an actual air-output temperature of the water-cooled intercooler;
determining whether the actual air-output temperature is within a preset temperature range; and
controlling a low-pressure EGR system and/or the electronic water pump according to a determination result.

In some embodiments of the present application, based on the foregoing solution, the low-pressure EGR system comprises an EGR valve, and the preset temperature range comprises a temperature lower than a first target air-output temperature, and the step of controlling the low-pressure EGR system and/or the electronic water pump according to the determination result comprises:
when the actual air-output temperature is lower than the first target air-output temperature, closing the EGR valve and controlling a rotational speed of the electronic water pump to a preset minimum value.

In some embodiments of the present application, based on the foregoing solution, the preset temperature range comprises a temperature greater than the first target air-output temperature and less than a second target air-output temperature, and the step of controlling the low-pressure EGR system and/or the electronic water pump according to the determination result comprises:
when the actual air-output temperature is greater than the first target air-output temperature and less than the second target air-output temperature, opening the EGR valve;
determining a maximum EGR rate corresponding to the actual air-output temperature; and
controlling the EGR rate of the low-pressure EGR system to be less than the maximum EGR rate corresponding to the actual air-output temperature.

In some embodiments of the present application, based on the foregoing solution, the step of determining the maximum EGR rate corresponding to the actual air-output temperature comprises:
dividing the preset temperature range into a plurality of temperature intervals according to a preset step size;
generating a preset relationship curve according to the temperature intervals and the maximum EGR rates corresponding to the temperature intervals;
searching for a target temperature interval corresponding to the actual air-output temperature from the preset relationship curve; and
determining the maximum EGR rate corresponding to the target temperature interval as the maximum EGR rate corresponding to the actual air-output temperature.

In some embodiments of the present application, based on the foregoing solution, the preset temperature range comprises a temperature greater than the second target air-output temperature and less than a third target air-output temperature, and the step of controlling the low-pressure EGR system and/or the electronic water pump according to the determination result comprises:
when the actual air-output temperature is greater than the second target air-output temperature and less than the third target air-output temperature, determining whether an engine rotational speed, an engine load, a water temperature of the electronic water pump, and an ambient temperature all satisfy a preset opening condition; and
when the engine rotational speed, the engine load, the water temperature of the electronic water pump, and the ambient temperature all satisfy the preset opening condition, opening the EGR valve.

In some embodiments of the present application, based on the foregoing solution, the preset temperature range comprises a temperature greater than the third target air-output temperature, and the step of controlling the low-pressure EGR system and/or the electronic water pump according to the determination result comprises:
when the actual air-output temperature is greater than the third target air-output temperature, closing the EGR valve and controlling the rotational speed of the electronic water pump to a preset maximum value.

In some embodiments of the present application, based on the foregoing solution, the control method further comprises:
controlling a rotational speed of the electronic water pump according to the actual air-output temperature, wherein the rotational speed of the electronic water pump is negatively correlated with the actual air-output temperature.

According to a second aspect of embodiments of the present application, a control apparatus for an engine intercooling system is provided, the engine intercooling system comprises a water-cooled intercooler and an electronic water pump, and the apparatus comprises:
a temperature acquisition unit, which is configured to acquire an actual air-output temperature of the water-cooled intercooler;
a temperature determination unit, which is configured to determine whether the actual air-output temperature is within a preset temperature range; and
a control unit, which is configured to control a low-pressure EGR system and/or the electronic water pump according to a determination result.

According to a third aspect of embodiments of the present application, a control device for an engine intercooling system is provided, and the control device comprises a processor and a memory, wherein the memory stores computer program instructions executable by the processor, and the processor, when executing the computer program instructions, implements the steps of the method according to any one of the first aspect described above.

According to a fourth aspect of embodiments of the present application, a computer-readable storage medium is provided, wherein the computer-readable storage medium stores computer program instructions, and when the computer program instructions are executed by a processor, the processor implements the steps of the method according to any one of the first aspect described above.

In the present application, the actual air-output temperature of the water-cooled intercooler is acquired; whether the actual air-output temperature is within the preset temperature range is determined, and the low-pressure EGR system and/or the electronic water pump are controlled according to the determination result. By means of the technical solutions provided by the present application, abnormal problems such as engine overheating and knocking can be reduced, and the reliability of the engine can be improved.

It should be understood that the foregoing general description and the following detailed description are merely exemplary and explanatory, and do not limit the present application.

### Brief Description of the Drawings

The drawings are incorporated into the specification and form a part thereof, illustrating embodiments in accordance with the present application and being used together with the specification to explain the principles of the present application. It is obvious that the drawings in the following description are only a part of embodiments of the present application, for those skilled in the art, other drawings may also be obtained based on these drawings without any inventive effort. In the figures:
Fig. 1 is a schematic diagram of an engine intercooling system in an embodiment of the present application;
Fig. 2 is a flowchart of a control method for an engine intercooling system in an embodiment of the present application;
Fig. 3 is a schematic diagram of a preset relationship curve in an embodiment of the present application;
Fig. 4 is a block diagram of a control apparatus for an engine intercooling system in an embodiment of the present application;
Fig. 5 is a structural diagram of a control device for an engine intercooling system in an embodiment of the present application.

### Detailed Description of the Embodiments

In the following, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those skilled in the art without inventive efforts shall fall within the protection scope of the present application.

In addition, the described features, structures, or characteristics can be combined in any suitable manner in one or more embodiments. In the following description, numerous specific details are provided in order to give a full understanding of the embodiments of the present application. However, those skilled in the art will realize that the technical solutions of the present application can be practiced without one or more of the specific details, or that other methods, components, apparatus, steps, etc. can be adopted. In other cases, well-known methods, apparatus, implementations, or operations are not described in detail in order to avoid obscuring various aspects of the present application.

The block diagrams shown in the drawings merely represent functional entities and do not necessarily correspond to physically independent entities. That is, the functional entities can be implemented in software, or can be implemented in one or more hardware modules or integrated circuits, or can be implemented in different networks and/or processor devices and/or microcontroller devices.

The flowcharts shown in the drawings are illustrative only, and do not necessarily comprise all contents and operations/steps, nor must they be executed in the order described. For example, some operations/steps can be further decomposed, while some operations/steps can be combined or partially combined. Therefore, the actual order of execution may change according to actual conditions.

To enable those skilled in the art to better understand the present application, a brief description of EGR technology is first provided. Introducing EGR technology under low engine load conditions can reduce intake pumping loss, thereby reducing fuel consumption; meanwhile, the introduction of EGR technology can lower the peak combustion temperature, significantly suppressing engine knock tendency, which helps increase the engine compression ratio and advance ignition timing, thereby further reducing fuel consumption. With the continuous tightening of fuel consumption and emission regulations, conventional vehicles need to continuously improve the combustion thermal efficiency of engines in order to maintain strong market competitiveness. Against this background, newly developed high-thermal-efficiency engines generally adopt EGR technology as a standard configuration. At present, engines equipped with a low-pressure EGR system are provided with an intercooling system. If the air-output temperature of the intercooling system is excessively low, a large amount of condensate will be generated when the exhaust gas in the low-pressure EGR system flows through the water-cooled intercooler, thereby causing engine misfire and abnormal vibration. In extremely cold weather conditions, such a large amount of condensate may cause throttle valve sticking, resulting in failure of operation. If the air-output temperature of the intercooling system is excessively high, engine knocking may occur, and the low-pressure EGR system will be unable to achieve the expected effects of fuel saving and emission reduction.

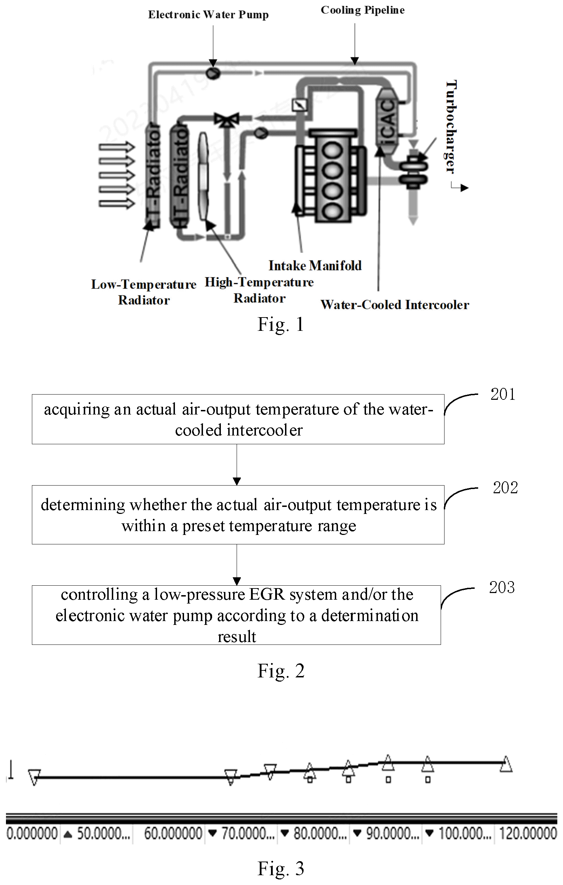

The engine intercooling system in the present application is briefly described below with reference to Fig. 1. As shown in Fig. 1, the engine intercooling system can comprise a water-cooled intercooler, a cooling pipeline, an electronic water pump, a low-temperature radiator, a turbocharger, and an intake manifold. The flow path of exhaust gas in the low-pressure EGR system is as follows: the exhaust gas first enters the turbocharger and mixes with fresh air, then enters an internal gas passage of the water-cooled intercooler, is cooled by coolant inside the water-cooled intercooler, and then flows through the intake manifold into cylinders to participate in the combustion process.

The cooling principle of the engine intercooling system is as follows: the cooling circulation of the intercooling system is independently controlled from the engine cooling circulation; and the flow of coolant in the cooling circulation of the intercooling system is achieved through the electronic water pump provided in the cooling pipeline. Through adjusting the rotational speed of the electronic water pump, the flow rate of the coolant can be controlled. After flowing through the low-temperature radiator, the coolant decreases in temperature, and the low-temperature coolant then flows through the cooling pipeline into the interior of the water-cooled intercooler to perform heat exchange with gas in a gas-side passage of the water-cooled intercooler, thereby cooling the gas temperature to below a target temperature, while the coolant rises in temperature due to heat absorption. The coolant then flows through the cooling pipeline back to the low-temperature radiator for cooling, thereby forming a continuous circulation.

Fig. 2 is a flowchart of a control method for an engine intercooling system in an embodiment of the present application, and the engine intercooling system comprises a water-cooled intercooler and an electronic water pump. As shown in Fig. 2, the control method for the engine intercooling system can comprise the following S201 to S203.

S201. An actual air-output temperature of the water-cooled intercooler is acquired.

In implementation, a temperature sensor can be arranged near the outlet of the water-cooled intercooler, and an electronic control unit (ECU) of the vehicle acquires the actual air-output temperature of the water-cooled intercooler from the temperature sensor.

S202. whether the actual air-output temperature is within a preset temperature range is determined.

It can be understood that the preset temperature range can be obtained through bench calibration. Depending on different impacts of the actual air-output temperature on the engine, the preset temperature range can be divided in different ways.

The preset temperature range can be less than a first target air-output temperature, or greater than the first target air-output temperature and less than a second target air-output temperature, or greater than the second target air-output temperature and less than a third target air-output temperature, or greater than the third target air-output temperature, wherein the first target air-output temperature, the second target air-output temperature, and the third target air-output temperature increase in increasing order.

Specifically, when the preset temperature range is less than the first target air-output temperature, if the actual air-output temperature is within the preset temperature range, the actual air-output temperature is lower than the first target air-output temperature; when the preset temperature range is greater than the first target air-output temperature and less than the second target air-output temperature, if the actual air-output temperature is within the preset temperature range, the actual air-output temperature is greater than the first target air-output temperature and less than the second target air-output temperature; when the preset temperature range is greater than the second target air-output temperature and less than the third target air-output temperature, if the actual air-output temperature is within the preset temperature range, the actual air-output temperature is greater than the second target air-output temperature and less than the third target air-output temperature; and when the preset temperature range is greater than the third target air-output temperature, if the actual air-output temperature is within the preset temperature range, the actual air-output temperature is greater than the third target air-output temperature.

S203. Low-pressure EGR system and/or the electronic water pump are controlled according to a determination result.

Specifically, the low-pressure EGR system comprises an EGR valve, and controlling the low-pressure EGR system can comprise controlling opening or closing of the EGR valve; and controlling the electronic water pump can comprise controlling a rotational speed of the electronic water pump.

It can be understood that, according to different determination results, the ECU can control only the low-pressure EGR system, control only the electronic water pump, or control both the low-pressure EGR system and the electronic water pump.

In some embodiments, the preset temperature range comprises a temperature lower than the first target air-output temperature, and the step of controlling the low-pressure EGR system and/or the electronic water pump according to the determination result comprises: when the actual air-output temperature is lower than the first target air-output temperature, the EGR valve is closed and the rotational speed of the electronic water pump is controlled to a preset minimum value.

It can be understood that, when the actual air-output temperature is lower than the first target air-output temperature, through closing the EGR valve, it is possible to prevent the use of the low-pressure EGR system under a relatively low actual air-output temperature, thereby avoiding the generation of a large amount of condensate when exhaust gas flows through the water-cooled intercooler, and further avoiding throttle valve icing and sticking as well as engine misfire. Therefore, reliable operation of the engine and components can be ensured.

The preset minimum value can be zero or other relatively small values. Through controlling the rotational speed of the electronic water pump to zero, the impeller of the electronic water pump stops rotating, so that no pressure difference is generated in the cooling pipeline and the coolant does not flow, and the actual air-output temperature of the water-cooled intercooler will gradually increase.

In other embodiments, the preset temperature range comprises a temperature greater than the first target air-output temperature and less than the second target air-output temperature, and the step for controlling the low-pressure EGR system and/or the electronic water pump according to the determination result comprises: when the actual air-output temperature is greater than the first target air-output temperature and less than the second target air-output temperature, the EGR valve is opened; a maximum EGR rate corresponding to the actual air-output temperature is determined; and an EGR rate of the low-pressure EGR system is controlled to be less than the maximum EGR rate corresponding to the actual air-output temperature.

It should be noted that, when the actual air-output temperature is greater than the first target air-output temperature and less than the second target air-output temperature, the ECU controls the EGR valve to open, so that exhaust gas in the low-pressure EGR system begins to flow, and the EGR system is activated. Within this preset temperature range, there is still a risk of condensation in the low-pressure EGR system; therefore, the EGR rate at each operating point needs to be limited to be less than the EGR rate corresponding to the actual air-output temperature, so as to reduce the exhaust gas flow in the low-pressure EGR system and thereby keep the amount of condensate within a reasonable range.

In implementation, the preset temperature range can be divided into a plurality of temperature intervals according to a preset step size; a preset relationship curve can be generated according to each temperature interval and the maximum EGR rate corresponding to each temperature interval; a target temperature interval corresponding to the actual air-output temperature can be searched from the preset relationship curve; and the maximum EGR rate corresponding to the target temperature interval can be determined as the maximum EGR rate corresponding to the actual air-output temperature.

Fig. 3 is a schematic diagram of a preset relationship curve in an embodiment of the present application. As shown in Fig. 3, assuming that the first target air-output temperature is 70°C and the second target air-output temperature is 100°C, the preset temperature range can be divided into three temperature intervals with a step size of 10°C, namely (70°C~80°C), (80°C~90°C), and (90°C~100°C). The maximum EGR rate corresponding to each temperature interval can be obtained through bench calibration tests. Specifically, during the bench calibration tests, a universal characteristic calibration can be performed under operating conditions of the low-pressure EGR system through monitoring an optimal ignition advance angle, an engine combustion uniformity index, and an engine misfire rate. The EGR rate is optimized and adjusted while ensuring that the above parameters satisfy preset conditions, and the maximum EGR rate is obtained under the premise that engine performance meets requirements. After obtaining the maximum EGR rate corresponding to each temperature interval, the respective maximum EGR rates are connected to obtain the preset relationship curve. The preset relationship curve characterizes a mapping relationship between different temperature intervals and the maximum EGR rates.

Through dividing the preset temperature range into a plurality of temperature intervals, searching the maximum EGR rate corresponding to the target temperature interval associated with the actual air-output temperature, and controlling the EGR rate of the low-pressure EGR system based on the determined maximum EGR rate, precise control of the EGR rate is achieved. While reducing the amount of condensate in the low-pressure EGR system, an optimal fuel consumption reduction effect is also achieved, thereby balancing fuel consumption benefits and engine reliability.

In other embodiments, the preset temperature range comprises a temperature greater than the second target air-output temperature and less than the third target air-output temperature, and the step for controlling the low-pressure EGR system and/or the electronic water pump according to the determination result comprises: when the actual air-output temperature is greater than the second target air-output temperature and less than the third target air-output temperature, whether an engine rotational speed, an engine load, a water temperature of the electronic water pump, and an ambient temperature all satisfy a preset opening condition are determined; and the EGR valve is opened when the engine rotational speed, the engine load, the water temperature of the electronic water pump, and the ambient temperature all satisfy the preset opening condition.

It can be understood that, when the actual air-output temperature is greater than the second target air-output temperature and less than the third target air-output temperature, the operating state of the low-pressure EGR system is not limited by the actual air-output temperature. In this case, opening or closing of the EGR valve can be controlled according to whether the engine rotational speed, the engine load, the water temperature of the electronic water pump, and the ambient temperature all satisfy the preset opening condition.

When the engine rotational speed, the engine load, the water temperature of the electronic water pump, and the ambient temperature all satisfy the preset opening condition, the EGR valve is controlled to be opened; otherwise, the EGR valve is controlled to be closed. The preset opening condition can be set based on operating states of the engine during engine calibration.

Specifically, assuming that during engine calibration, when the engine rotational speed is lower than a first limit (e.g., 1500 rpm) or higher than a second limit (e.g., 5500 rpm), enabling the low-pressure EGR system may cause unstable combustion and engine misfire, the preset opening condition can comprise that the engine rotational speed is between the first limit and the second limit. That is, when the engine rotational speed satisfies the preset opening condition, the EGR valve is opened so as to avoid engine misfire.

Assuming that during engine calibration, when the engine load is lower than a third limit (e.g., 5 bar) or higher than a fourth limit (e.g., 18 bar), enabling the low-pressure EGR system may cause unstable combustion and engine misfire, the preset opening condition can comprise that the engine load is between the third limit and the fourth limit. That is, when the engine load satisfies the preset opening condition, the EGR valve is opened so as to avoid engine misfire.

Assuming that during engine calibration, when the water temperature of the electronic water pump is lower than a fifth limit (e.g., 40°C) and the low-pressure EGR system is activated, significant engine misfire and vibration may occur, and when the water temperature is higher than a sixth limit (e.g., 120°C) and the low-pressure EGR system is activated, engine knocking may be caused, the preset opening condition can comprise that the water temperature is between the fifth limit and the sixth limit. That is, when the water temperature satisfies the preset opening condition, the EGR valve is opened so as to avoid engine misfire, vibration, and knocking.

Assuming that during engine calibration, when the ambient temperature is lower than a seventh limit (e.g., -10°C) and the low-pressure EGR system is activated, water vapor in exhaust gas may condense into condensate upon cooling, which may further freeze and block the cooling pipeline during the next start. Therefore, the preset opening condition can comprise that the ambient temperature is higher than the seventh limit. That is, when the ambient temperature satisfies the preset opening condition, the EGR valve is opened so as to avoid blockage of the cooling pipeline.

In some embodiments, the preset temperature range comprises a temperature greater than the third target air-output temperature, and the step of controlling the low-pressure EGR system and/or the electronic water pump according to the determination result comprises: when the actual air-output temperature is greater than the third target air-output temperature, the EGR valve is closed and the rotational speed of the electronic water pump is controlled to a preset maximum value.

It can be understood that, when the actual air-output temperature is greater than the third target air-output temperature, the actual air-output temperature is at a relatively high level. In this case, the ECU controls the EGR valve to be closed and controls the rotational speed of the electronic water pump to a maximum value, so that the flow rate of the coolant in the cooling pipeline is maximized, enabling rapid heat exchange and thereby preventing the actual air-output temperature from further increasing.

In some embodiments, the control method for the engine intercooling system can further comprise: the rotational speed of the electronic water pump is controlled according to the actual air-output temperature, and the rotational speed of the electronic water pump is negatively correlated with the actual air-output temperature.

It can be understood that control of the rotational speed of the electronic water pump can be performed simultaneously with control of the low-pressure EGR system, that is, while adjusting the EGR valve, the rotational speed of the electronic water pump is dynamically adjusted according to the actual air-output temperature.

Specifically, when the actual air-output temperature is relatively low, the rotational speed of the electronic water pump can be controlled to zero or to operate at a low speed; and when the actual air-output temperature is relatively high, the electronic water pump can be controlled to operate at a high speed or at full speed, so as to achieve an optimal air-output temperature under different operating conditions of the engine.

Through dynamically adjusting the rotational speed of the electronic water pump, it is possible to meet the design targets for engine power performance and fuel economy, while ensuring that abnormal problems such as engine overheating and knocking do not occur, thereby ensuring reliable operation of the engine.

The embodiments of the present application obtain the actual air-output temperature of the water-cooled intercooler, determine whether the actual air-output temperature is within the preset temperature range, and control the low-pressure EGR system and/or the electronic water pump according to the determination result. By means of the technical solutions provided by the present application, abnormal problems such as engine overheating and knocking can be reduced, and the reliability of the engine can be improved.

The following describes apparatus embodiments of the present application, which can be adopted to implement the above control method for the engine intercooling system. For details not disclosed in the apparatus embodiments of the present application, reference cany be made to the embodiments of the control method for the engine intercooling system described above.

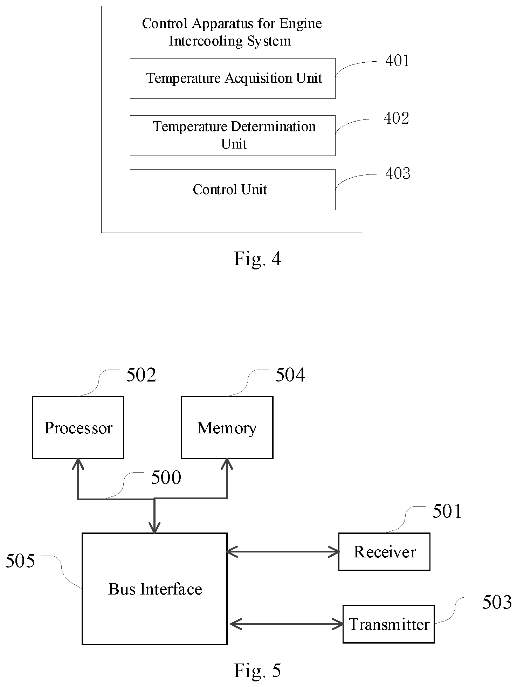

Referring to Fig. 4, Fig. 4 is a block diagram of a control apparatus for an engine intercooling system in an embodiment of the present application.

As shown in Fig. 4, the embodiment of the present application provides a control apparatus for an engine intercooling system, the engine intercooling system comprises a water-cooled intercooler and an electronic water pump, and the control apparatus of the engine intercooling system comprises a temperature acquisition unit 401, a temperature determination unit 402, and a control unit 403. The temperature acquisition unit 401 is configured to acquire an actual air-output temperature of the water-cooled intercooler; the temperature determination unit 402 is configured to determine whether the actual air-output temperature is within a preset temperature range; and the control unit 403 is configured to control a low-pressure EGR system and/or the electronic water pump according to a determination result.

In some embodiments of the present application, based on the foregoing solution, the low-pressure EGR system comprises an EGR valve, and the preset temperature range comprises a temperature lower than a first target air-output temperature. The control unit 403 is further configured to, when the actual air-output temperature is lower than the first target air-output temperature, close the EGR valve and control the rotational speed of the electronic water pump to a preset minimum value.

In some embodiments of the present application, based on the foregoing solution, the preset temperature range comprises a temperature greater than the first target air-output temperature and less than a second target air-output temperature. The control unit 403 is further configured to, when the actual air-output temperature is greater than the first target air-output temperature and less than the second target air-output temperature, open the EGR valve; determine a maximum EGR rate corresponding to the actual air-output temperature; and control an EGR rate of the low-pressure EGR system to be less than the maximum EGR rate corresponding to the actual air-output temperature.

In some embodiments of the present application, based on the foregoing solution, the control unit 403 is further configured to divide the preset temperature range into a plurality of temperature intervals according to a preset step size; generate a preset relationship curve according to each temperature interval and the maximum EGR rate corresponding to each temperature interval; search for a target temperature interval corresponding to the actual air-output temperature from the preset relationship curve; and determine the maximum EGR rate corresponding to the target temperature interval as the maximum EGR rate corresponding to the actual air-output temperature.

In some embodiments of the present application, based on the foregoing solution, the preset temperature range comprises a temperature greater than the second target air-output temperature and less than a third target air-output temperature. The control unit 403 is further configured to, when the actual air-output temperature is greater than the second target air-output temperature and less than the third target air-output temperature, determine whether an engine rotational speed, an engine load, a water temperature of the electronic water pump, and an ambient temperature all satisfy a preset opening condition; and open the EGR valve when the engine rotational speed, the engine load, the water temperature of the electronic water pump, and the ambient temperature all satisfy the preset opening condition.

In some embodiments of the present application, based on the foregoing solution, the preset temperature range comprises a temperature greater than a third target air-output temperature. The control unit 403 is further configured to, when the actual air-output temperature is greater than the third target air-output temperature, close the EGR valve and control the rotational speed of the electronic water pump to a preset maximum value.

In some embodiments of the present application, based on the foregoing solution, the control unit 403 is further configured to control the rotational speed of the electronic water pump according to the actual air-output temperature, and the rotational speed of the electronic water pump is negatively correlated with the actual air-output temperature.

Based on the same inventive concept, the embodiments of the present application further provide a control device for an engine intercooling system. Referring to Fig. 5, Fig. 5 is a structural diagram of a control device for an engine intercooling system in an embodiment of the present application. The control device for the engine intercooling system comprises one or more memories 504, one or more processors 502, and at least one computer program (computer program instruction) stored in the memory 504 and executable on the processor 502, and when the processor 502 executes the computer program, the method described above is implemented.

In Fig. 5, a bus architecture (represented by a bus 500) is provided, and the bus 500 can comprise any number of interconnected buses and bridges, linking together various circuits of one or more processors represented by the processor 502 and memories represented by the memory 504. The bus 500 can further link various other circuits, such as peripheral devices, voltage regulators, and power management circuits, which are well known in the art, and thus will not be described in further detail herein. A bus interface 505 provides an interface between the bus 500 and a receiver 501 and a transmitter 503. The receiver 501 and the transmitter 503 can be the same component, namely a transceiver, providing units for communication with various other devices over a transmission medium. The processor 502 is responsible for managing the bus 500 and perform general processing, while the memory 504 can be configured to store data utilized by the processor 502 during execution of operations.

Based on the same inventive concept, the embodiment of the present application provides a computer-readable storage medium, the computer-readable storage medium stores computer program instructions, and when the computer program instructions are executed by a processor, the processor implements the steps of the method as described above.

The functions described herein can be implemented in hardware, software executed by a processor, firmware, or any combination thereof. If implemented in the software executed by the processor, the functions can be stored as one or more instructions or code on a computer-readable medium or transmitted via a computer-readable medium. Other examples and embodiments are within the scope and spirit of the present application and the appended claims. For instance, due to the nature of software, the functions described above can be implemented in software executed by a processor, hardware, firmware, hard-wired circuitry, or any combination thereof. In addition, the functional units can be integrated into a single processing unit, or each unit can physically exist separately, or two or more units can be integrated into one unit.

It should be understood that, in the various embodiments provided in the present application, the disclosed technical content can be implemented in other ways. The apparatus embodiments described above are merely illustrative. For example, the division of units represents a logical functional division, and in actual implementation, alternative divisions can be employed, such as a plurality of units or components can be combined or integrated into another system, or certain features can be omitted or not executed. Additionally, any coupling or direct coupling or communication connection shown or discussed can be an indirect coupling or communication connection through one or more interfaces, units, or modules, and can be in electrical or other forms.

The units described as separate components can or can not be physically separate, and the components of the control device can or can not constitute physical units, that is, they can be located in a single place or distributed across a plurality of units. Depending on actual needs, some or all of the units can be selected to achieve the objectives of the embodiments of the present application.

If the integrated unit is implemented as a software functional unit and sold or used as a standalone product, it can be stored on a computer-readable storage medium. Based on such an understanding, the technical solution of the present application, or the part that contributes to the prior art, or the whole or part of the technical solution can be embodied as a software product. This computer software product is stored in a storage medium and comprises a plurality of instructions that enable a computer device (which can be a personal computer, server, or network device, etc.) to execute all or part of the steps of the method in the embodiments of the present application. The storage media described above comprise various media capable of storing computer program instructions, such as universal serial bus (USB) flash drives, readonly memory (ROM), random access memory (RAM), portable hard drives, magnetic disks, or optical disks.

The above is only exemplary embodiments of the present application and does not limit the scope of the present application. For those skilled in the art, the present invention can have various modifications and variations. Any modifications, equivalent substitutions, improvements, etc. made within the spirit and principles of the present application shall be included within the scope of the claims of the present application.

## Claims

1. A control method for an engine intercooling system, wherein the engine intercooling system comprises a water-cooled intercooler and an electronic water pump, and the control method comprises:
acquiring an actual air-output temperature of the water-cooled intercooler;
determining whether the actual air-output temperature is within a preset temperature range; and
controlling a low-pressure exhaust gas recirculation EGR system and/or the electronic water pump according to a determination result.

2. The control method for the engine intercooling system according to claim 1, wherein the low-pressure EGR system comprises an EGR valve, and the preset temperature range comprises a temperature lower than a first target air-output temperature, and the step of controlling the low-pressure EGR system and/or the electronic water pump according to the determination result comprises:
when the actual air-output temperature is lower than the first target air-output temperature, closing the EGR valve and controlling a rotational speed of the electronic water pump to a preset minimum value.

3. The control method for the engine intercooling system according to claim 2, wherein the preset temperature range comprises a temperature greater than the first target air-output temperature and less than a second target air-output temperature, and the step of controlling the low-pressure EGR system and/or the electronic water pump according to the determination result comprises:
when the actual air-output temperature is greater than the first target air-output temperature and less than the second target air-output temperature, opening the EGR valve;
determining a maximum EGR rate corresponding to the actual air-output temperature; and
controlling the EGR rate of the low-pressure EGR system to be less than the maximum EGR rate corresponding to the actual air-output temperature.

4. The control method for the engine intercooling system according to claim 3, wherein the step of determining the maximum EGR rate corresponding to the actual air-output temperature comprises:
dividing the preset temperature range into a plurality of temperature intervals according to a preset step size;
generating a preset relationship curve according to the temperature intervals and the maximum EGR rates corresponding to the temperature intervals;
searching for a target temperature interval corresponding to the actual air-output temperature from the preset relationship curve; and
determining the maximum EGR rate corresponding to the target temperature interval as the maximum EGR rate corresponding to the actual air-output temperature.

5. The control method for the engine intercooling system according to claim 3, wherein the preset temperature range comprises a temperature greater than the second target air-output temperature and less than a third target air-output temperature, and the step of controlling the low-pressure EGR system and/or the electronic water pump according to the determination result comprises:
when the actual air-output temperature is greater than the second target air-output temperature and less than the third target air-output temperature, determining whether an engine rotational speed, an engine load, a water temperature of the electronic water pump, and an ambient temperature all satisfy a preset opening condition; and
when the engine rotational speed, the engine load, the water temperature of the electronic water pump, and the ambient temperature all satisfy the preset opening condition, opening the EGR valve.

6. The control method for the engine intercooling system according to claim 4, wherein the preset temperature range comprises a temperature greater than the third target air-output temperature, and the step of controlling the low-pressure EGR system and/or the electronic water pump according to the determination result comprises:
when the actual air-output temperature is greater than the third target air-output temperature, closing the EGR valve and controlling the rotational speed of the electronic water pump to a preset maximum value.

7. The control method for the engine intercooling system according to claim 1, wherein the control method further comprises:
controlling a rotational speed of the electronic water pump according to the actual air-output temperature, wherein the rotational speed of the electronic water pump is negatively correlated with the actual air-output temperature.

8. The control method for the engine intercooling system according to claim 2, wherein the control method further comprises:
controlling the rotational speed of the electronic water pump according to the actual air-output temperature, wherein the rotational speed of the electronic water pump is negatively correlated with the actual air-output temperature.

9. The control method for the engine intercooling system according to claim 3, wherein the control method further comprises:
controlling the rotational speed of the electronic water pump according to the actual air-output temperature, wherein the rotational speed of the electronic water pump is negatively correlated with the actual air-output temperature.

10. The control method for the engine intercooling system according to claim 4, wherein the control method further comprises:
controlling the rotational speed of the electronic water pump according to the actual air-output temperature, wherein the rotational speed of the electronic water pump is negatively correlated with the actual air-output temperature.

11. The control method for the engine intercooling system according to claim 5, wherein the control method further comprises:
controlling the rotational speed of the electronic water pump according to the actual air-output temperature, wherein the rotational speed of the electronic water pump is negatively correlated with the actual air-output temperature.

12. The control method for the engine intercooling system according to claim 6, wherein the control method further comprises:
controlling the rotational speed of the electronic water pump according to the actual air-output temperature, wherein the rotational speed of the electronic water pump is negatively correlated with the actual air-output temperature.

13. A control apparatus for an engine intercooling system, wherein the engine intercooling system comprises a water-cooled intercooler and an electronic water pump, and the apparatus comprises:
a temperature acquisition unit, which is configured to acquire an actual air-output temperature of the water-cooled intercooler;
a temperature determination unit, which is configured to determine whether the actual air-output temperature is within a preset temperature range; and
a control unit, which is configured to control a low-pressure exhaust gas recirculation EGR system and/or the electronic water pump according to a determination result.

14. A control device for an engine intercooling system, comprising a processor and a memory, wherein the memory stores computer program instructions executable by the processor, and the processor, when executing the computer program instructions, implements the steps of the method according to any one of claims 1 to 12.

15. A computer-readable storage medium, wherein the computer-readable storage medium stores computer program instructions, and when the computer program instructions are executed by a processor, the processor implements the steps of the method according to any one of claims 1 to 12.
